# EUROPÄISCHE PATENTSCHRIFT

(11) **EP 2 139 747 B1**
(45) Veröffentlichungstag und Bekanntmachung des Hinweises auf die Patenterteilung: **08.06.2011**
(21) Anmeldenummer: 08734596.3
(22) Anmeldetag: 10.03.2008
(51) Int. Cl.: B62D 5/04

(54) **ELEKTROMECHANISCHES SYSTEM UND VERFAHREN ZUR ERKENNUNG EINES BEGINNENDEN EINFRIERENS EINES ELEKTROMECHANISCHEN SYSTEMS**
ELECTROMECHANICAL SYSTEM AND METHOD FOR DETECTING THE BEGINNING STAGE OF FREEZING OF AN ELECTROMECHANICAL SYSTEM
SYSTÈME ÉLECTROMÉCANIQUE ET PROCÉDÉ PERMETTANT DE DÉTECTER UN DÉBUT DE CONGÉLATION D'UN SYSTÈME ÉLECTROMÉCANIQUE

(30) Priorität: 26.03.2007 DE 102007014344
(43) Veröffentlichungstag der Anmeldung: 06.01.2010
(73) Patentinhaber: Volkswagen Aktiengesellschaft, 38436 Wolfsburg (DE)
(72) Erfinder: BARTELS, Alexander, 38114 Braunschweig (DE); KILZ, Sebastian, 38118 Braunschweig (DE)
(86) Internationale Anmeldenummer: PCT/EP2008/001876
(87) Internationale Veröffentlichungsnummer: WO 2008/116555

(56) Entgegenhaltungen:
- US-A- 5 271 475
- US-A1- 2002 017 885
- US-A1- 2004 138 797
- US-A1- 2005 067 233

## Beschreibung

Die Erfindung betrifft ein elektromechanisches System und ein Verfahren zur Erkennung eines beginnenden Einfriervorganges eines elektromechanischen Systems sowie ein Kraftfahrzeug mit einem elektromechanischen System.

Elektromechanische Systeme sind für vielfältige Anwendungsgebiete bekannt. Insbesondere in der Kraftfahrzeugtechnik werden zunehmend reine mechanische Systeme durch elektromechanische Systeme ersetzt. Beispiele hierfür sind elektromechanische Lenkungen oder auch elektromechanische Bremsen. Gemeinsam ist diesen Systemen, dass mittels eines Elektromotors ein mechanisches Element bewegt wird. Dabei kann die Bewegung des mechanischen Elements ausschließlich oder nur ergänzend über den Elektromotor erfolgen. Ein solches System ist aus der US 2004/0138797 A1 bekannt. Aufgrund der Tatsache, dass die elektromechanischen Systeme häufig oder ausschließlich im Freien eingesetzt werden, sind diese sich ändernden Umgebungsbedingungen ausgesetzt. Insbesondere ein Einfrieren des Systems durch eindringende Flüssigkeit oder Betriebsflüssigkeiten stellt ein Problem dar.

Der Erfindung liegt daher das technische Problem zugrunde, ein elektromechanisches System und ein Verfahren zu Erkennung eines beginnenden Einfrierens eines elektromechanischen Systems zu schaffen.

Die Lösung des technischen Problems ergibt sich durch die Gegenstände mit den Merkmalen der Ansprüche 1, 9 und 10. Weitere vorteilhafte Ausgestaltungen der Erfindung ergeben sich aus den Unteransprüchen.

Hierzu erfasst das elektromechanische System mindestens einen Elektromotor, mindestens ein mechanisches Element, das von dem Elektromotor bewegt wird, und ein Steuergerät, wobei dem Steuergerät mindestens eine Eingangsgröße zugeführt wird, wobei das Steuergerät aus der Eingangsgröße eine Sollgröße für den Elektromotor ermittelt, wobei eine Stellgröße des mechanischen Elementes erfasst und dem Steuergerät übermittelt wird, wobei aus dem Vergleich von Sollgröße für den Elektromotor und der Stellgröße des mechanischen Elementes ein Stick-Slip-Effekt erfasst wird, anhand dessen auf einen beginnenden Einfriervorgang geschlossen werden kann. Dabei kann die Eingangsgröße auch bereits die Sollgröße selbst sein. Die Einfriererkennung basiert auf der Tatsache, dass bei der Bewegung von einfrierenden flüssigkeitsgefüllten elektromechanischen Systemen charakteristische Effekte auftreten. In diesem Sinne umfasst im Sinne der Erfindung das Einfrieren ebenso die Gefahr des Einfrierens sowie die Gefahr der temperaturbedingten Schwergängigkeit des elektromechanischen Systems. Ursache ist eine allmähliche Eiskristallbildung in der Flüssigkeit bzw. das Verfestigen der entsprechenden Flüssigkeit, deren Viskosität sich demzufolge verändert. Dadurch kommt es zu ausgeprägten Stick-Slip-Effekten bei Einleitung von Bewegung. Gleiches gilt für von außen eingetretene Flüssigkeiten wie beispielsweise Wasser. Die Erkennung ist vorzugsweise für weggeregelte Systeme geeignet.

Der Stick-Slip-Effekt bezeichnet das Ruckgleiten von gegeneinander bewegten Festkörpern. Dabei üben gedämpft gekoppelte Oberflächenteile eine schnelle Bewegungsfolge aus Haften, Verspannen, Trennen und Abgleiten aus. Dies führt je nach System zur Anregung von Schwingungen, die von einer resonanzfähigen Oberfläche beispielsweise als Geräusch abgestrahlt werden können. Ein elektromechanisches System könnte somit unter anderem einen höheren Geräuschpegel aufweisen. Beispiele hierfür sind das Quietschen von Eisen- oder Straßenbahn bei Kurvenfahrt oder bei Bremsmanövern, ratternde Scheibenwischer auf Autoscheiben oder auch das "Knarzen" von Lederschuhen. Bei einem Kraftfahrzeug mit einem erfindungsgemäßen elektromechanischen System ist somit bei Auftreten des Stick-Slip-Effekts in einem elektromechanischen System zumindest mit unerwünschten Komforteinbussen einschließlich Erhöhung des Geräuschpegels im Betrieb zu rechnen. Bei einer zunehmenden Erhöhung des Haftanteils (Stick-Anteils) kann es sogar im ungünstigsten Fall zu einer Funktionsbeeinträchtigung kommen.

Die notwendigen Kräfte zur Erkennung des Stick-Slip-Effektes sind systemabhängig und liegen weit über den aus der Grundreibung (Gesamtreibung des Systems). Aufgrund der Komplexität des zu erkennenden Effektes besteht die Umsetzung der Einfriererkennung aus zwei Teilen:
1. Die "Stick"-Erkennung - die Erkennung vom stillstehenden System bei ansteigender Kraft (Überwindung der Haftreibung)
2. Die "Slip"-Erkennung - Beginn der Bewegung im Bereich des Maximums der aufgebrachten Kraft gefolgt von einer Verringerung der notwendigen Kraft zur Wegregelung (Überwindung der Gleitreibung); Dies ist gleichbedeutend mit der Tatsache, dass der Gradient der Kraft ein anderes Vorzeichen aufweist als der Gradient der Position.

Diese beiden Teile sollten mehrfach direkt aufeinander folgen, um einen Stick-Slip-Effekt zu erkennen. Mehrere solcher Effekte innerhalb einer bestimmten Zeitspanne weisen auf ein einfrierendes System hin. Dabei sollte die Zeit zur Auswertung des Krafteinbruchs nicht zu lange gewählt werden, da bei nutzergeführten Systemen dieser agiert. Beispielsweise wird die Zeitspanne auf 100 ms, vorzugsweise kleiner 50 ms, oder weniger beschränkt, um den Slip-Effekt von anderen Interaktionen zu unterscheiden.

In einer bevorzugten Ausführungsform ist das elektromechanische System als elektromechanische Lenkung ausgebildet. Dabei ist vorzugsweise die Stellgröße des mechanischen Elementes ein Motorwinkel oder ein Ritzelwinkel und die Sollgröße des Elektromotors ein Motorsollmoment. Diese Stellgrößen beeinflussen den Lenkeinschlag des Kraftfahrzeugs.

In einer weiteren bevorzugten Ausführungsform wird der Elektromotor bei Erfassung eines Stick-Slip-Effektes zyklisch in wechselnder Richtung bestromt. Durch die zyklische Bestromung mit wechselnder Richtung wird die Eisbildung bzw. die Verdickung der jeweiligen Flüssigkeit verhindert und kleinere, temperaturbedingte Verbindungen aufgehoben. Gleichzeitig wird durch auftretende Reibungsverluste das System erwärmt und somit insgesamt dem Einfrieren entgegengewirkt. Mit anderen Worten ausgedrückt werden Betriebs- oder in das System eindringende Flüssigkeiten an einfriergefährdeten Stellen kontinuierlich in Bewegung gehalten, Kristallbildung verhindert oder die Flüssigkeiten durch die angeregte Bewegung durchmischt.

In einer weiteren bevorzugten Ausführungsform ist das zyklische Stromsignal jeweils im wesentlichen rechteckförmig, trapezförmig, sinusförmig oder dreieckförmig ausgebildet, wobei das Stromsignal vorzugsweise einen Mittelwert von Null aufweist, also Kraft-Offset-Frei ist, d.h. das zyklische Stromsignal bewirkt im Mittel keine zusätzliche resultierende Kraft am Elektromotor. Besonders bevorzugt ist das im wesentlichen rechteckförmige Stromsignal, da dies eine schnelle Kraftumkehr bewirkt und einfach gebildet werden kann.

Eine weitere Möglichkeit zur Aufschaltung eines überlagerten Stromes besteht darin, dass eine Spannungsquelle auf die jeweilige Wicklung des Elektromotors des elektromechanischen Systems, beispielsweise mittels MOS-FETs (Metal Oxide Semiconductor Field Effect Transistor) oder IGBTs (Insulated Gate Bipolar Transistor), geschaltet wird. Der dazugehörige Strom stellt sich dann aufgrund der vorliegenden Impedanz der jeweiligen Wicklung ein.

In einer weiteren bevorzugten Ausführungsform wird die Frequenz des zyklischen Stromsignals größer 20 Hz gewählt, weiter vorzugsweise größer 40 Hz. Die Frequenz wird dabei vorzugsweise derart gewählt, dass die Beeinträchtigung für einen Nutzer bzw. den Betriebslauf des elektromechanischen Systems gering ist. Gleiches gilt für die geeignete Wahl der Amplitude des Stromsignals. Allerdings kann die Frequenz und die Amplitude auch derart gewählt werden, dass eine akustische und/oder haptische Spürbarkeit für den Nutzer gegeben ist, so dass dieser gewarnt wird. Frequenz, Amplitude und Warnintervalle können betriebsabhängig gewählt werden.

In einer weiteren bevorzugten Ausführungsform wird das zyklische Stromsignal dem Betriebsstromsignal überlagert, d.h. das "Freirütteln" findet während des normalen Betriebes statt. Es sind jedoch auch Anwendungen denkbar, wo das zyklische Bestromen auf Ruhezustände beschränkt bzw. erweitert wird.

In einer weiteren bevorzugten Ausführungsform wird bei Erfassung eines Stick-Slip-Effektes eine akustische und/oder optische und/oder haptische Warneinrichtung angesteuert, um den Fahrer zu informieren.

Ein bevorzugtes Anwendungsgebiet der Erfindung ist eine elektromechanische Lenkung in einem Kraftfahrzeug.

Die Erfindung wird nachfolgend anhand eines bevorzugten Ausführungsbeispieles näher erläutert. Die Fig. zeigen:
- Fig. 1.: ein schematisches Blockschaltbild eines elektromechanischen Systems und
- Fig. 2: eine Darstellung der Momente bzw. Ritzelwinkel einer elektromechanischen Lenkung bei einem Einfriervorgang.

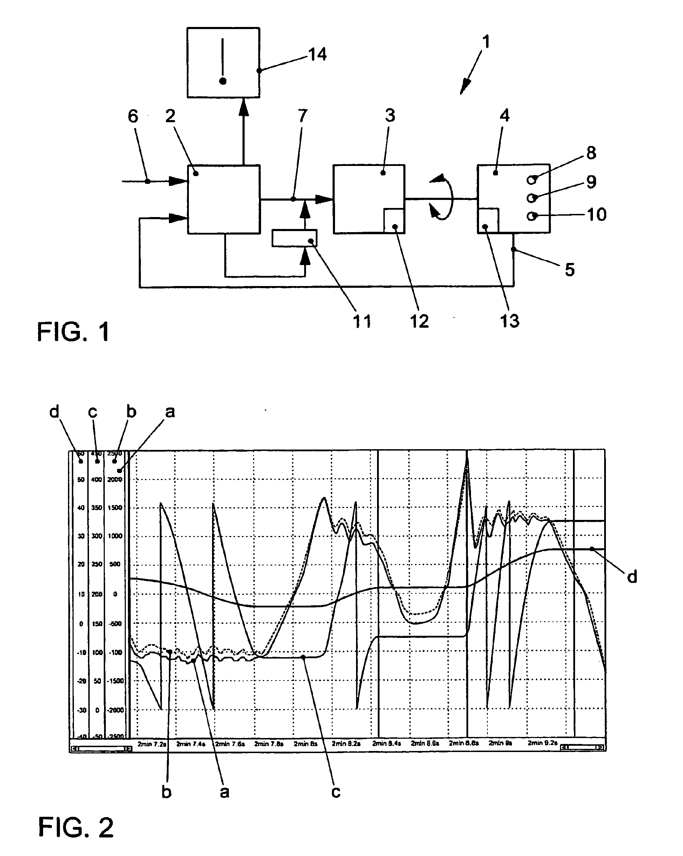

In der Fig. 1 ist schematisch ein elektromechanisches System 1 dargestellt. Das elektromechanische System 1 umfasst ein Steuergerät 2, einen Elektromotor 3 und ein mechanisches Element 4, das von dem Elektromotor 3 bewegt wird. Über einen alternativen Stromsensor 11 wird ein Betriebsstrom 7 des Elektromotors 3 erfasst. Weiterhin optional vorhanden sind ein Kraftsensor 12 und/oder ein Drehmomentsensor 13, mit denen eine Variation aufzubringender Kräfte oder Dehmomente messbar sind. Weiterhin wird die IstPosition 5 des mechanischen Elementes 4 dem Steuergerät 2 übermittelt. Des Weiteren erhält das Steuergerät 2 eine Eingangsgröße 6, beispielsweise ein Motorsollmoment. Aus der Eingangsgröße 6 berechnet das Steuergerät ein Betriebsstrom 7, mit dem der Elektromotor bestromt wird, um das gewünschte Motormoment zu erzeugen. Weist nun das mechanische Element 4 eine Betriebsflüssigkeit auf oder befindet sich eine eingetretene Flüssigkeit wie beispielsweise Wasser im Bereich des mechanischen Elementes, so besteht die Gefahr des Einfrierens. Um nun die Gefahr des Einfrierens oder die Gefahr des Verdickens zu erkennen, ist in dem Steuergerät 2 eine Einfriererkennung bzw. eine Erkennung der Verdickung einer Betriebsflüssigkeit oder einer in das elektromechanische System eingedrungenen Flüssigkeit integriert. Die Einfriererkennung basiert auf der Tatsache, dass bei der Bewegung von einfrierenden flüssigkeitsgefüllten elektromechanischen Systemen charakteristische Effekte auftreten. Ursache ist eine allmähliche Eiskristallbildung in der Flüssigkeit (bzw. eine Kristallbildung, sofern es sich bei der Flüssigkeit nicht um Wasser handelt) oder eine Verklumpung, die deren Viskosität verändert. Dadurch kommt es zu ausgeprägten Stick-Slip-Effekten bei Einleitung von Bewegungen, wobei die Erkennung vorzugsweise für weggeregelte Systeme wie beispielsweise eine elektromechanische Lenkung geeignet ist. Als geeignete Mittel zur Erkennung der Gefahr des Verdickens oder des Einfrierens einer Betriebsflüssigkeit oder einer in das elektromechanische System, eingedrungenen Flüssigkeit können ein Temperatursensor 8 und/oder ein Feuchtesensor 9 und oder ein Stick-Slip-Erkenner 10 dienen. Ein Stick-Slip-Erkenner 10 ist ein geeignetes Mittel zum Erkennen des Stick-Slip-Effektes, beispielsweise durch Aufnahme von Geräuschen bzw von Körperschall des elektromechanischen Systems und durch anschließende Frequenzanalyse des Geräusch- oder Körperschallsignals und durch nachfolgenden Vergleich mit einem Sollwertsignal oder einem zugehörigen Schwellwert für bestimmte Frequenzen. Die Erkennung erfolgt bei Durchschreitung des Schwellwertsignals bzw. bei ausreichender Abweichung vom Sollwertsignal.

Die notwendigen Kräfte zur Erkennung des Slip-Stick-Effektes sind systemabhängig, liegen aber weit über den üblichen Kräften zur Überwindung der Gesamtreibung des Systems. Aufgrund der Komplexität des zu erkennenden Effektes besteht die Umsetzung der Einfriererkennung aus zwei Teilen:
1) Die Stick-Erkennung, .d.h. die Erkennung von stillstehenden Systemen bei ansteigender Kraft (Überwindung der Kraftreibung)
2) Die Slip-Erkennung, d.h. Beginn der Bewegung im Bereich des Maximus der aufgebrachten Kraft gefolgt von einer Verringerung der notwendigen Kraft zur Wegregelung (Überwindung der Gleitreibung)

Diese beiden Teile sollten mehrfach direkt aufeinander folgen, um ein Stick-Slip-Effekt sicher zu erkennen. Mehrere solcher Stick-Slip-Effekte innerhalb einer definierten oder definierbarn Zeitspanne weisen dann auf ein einfrierendes System hin.

Hat nun das Steuergerät 2 eine solche Situation erfasst, so wird ein zusätzliches, zyklisches Stromsignal gebildet, dessen Vorzeichen zyklisch wechselt und dessen zeitlicher Mittelwert vorzugsweise Null ist. Dieses zusätzliche Stromsignal wird dann auf den Betriebsstrom 7 aufaddiert. Die Frequenz und die Amplitude werden dabei derart gewählt, dass das Betriebsverhalten sich nicht ändert, aber durch die zyklischen Bewegungen der Eiskristallbildung entgegengewirkt wird. Vorzugsweise soll jedoch insbesondere bei von Nutzern geführten elektromechanischen Systemen, wie beispielsweise einer elektromechanischen Lenkung in einem Kraftfahrzeug der Nutzer die Gefahr mitgeteilt bekommen. Dies kann durch geeignete Wahl der Frequenz und/oder Amplitude erfolgen, die dann gleichzeitig ein optisches und/oder haptisches und/oder akustisches Warnsignal an einer Warneinrichtung 14 für den Nutzer erzeugen. Die Aufsummierung erfolgt in einem Ausführungsbeispiel im Falle einer elektromechanischen Lenkung vorzugsweise im Stillstand der elektromechanischen Lenkung und in einem weiteren Ausführungsbeispiel zusätzlich im Leerlaufzustand eines Kraftfahrzeuges. Im Leerlauf, sofern es sich gleichzeitig um einen Fahrzeugstillstand handelt, hat die zyklische Bestromung den Vorteil, dass die Fahrtrichtung nicht beeinflusst wird.

In der Fig. 2 sind beispielhafte Verläufe für das Handmoment (Verlauf a), das Motorsollmoment (Verlauf b), dem Motorwinkel (Verlauf c) bzw. den Ritzelwinkel (Verlauf d) bei einer elektromechanischen Lenkung dargestellt. Üblicherweise folgt der Ritzelwinkel dem Motorsollmoment. Zum Zeitpunkt "2 min., 7,8 s" steigt jedoch das Handmoment und damit auch das Motorsollmoment an, jedoch ändert sich nicht der Ritzelwinkel. Gleiches gilt für den Motorwinkel, der dem Ritzelwinkel folgt. Der sägezahnartige Verlauf des Motorwinkels beruht dabei auf der Tatsache, dass dieser die Motorlage wiedergibt und somit mit jeder Umdrehung bei 0° begrenzt wurde. Das Handmoment steigt dann immer weiter bis zum Zeitpunkt "2 min., 8,1 s", wo in etwa das Handmoment sein Maximum aufweist (Stick-Phase). Anschließend steigt der Motorwinkel steil an und auch der Ritzelwinkel steigt, wohingegen das Handmoment aber auch das Motorsollmoment zunächst absinken. Der Gradient vom Motorsollmoment bzw. Handmoment hat dabei ein anderes Vorzeichen als der Gradient des Ritzelwinkels (slip-Phase). Der Zeitpunkt "2 min., 8,2 s" stellt das Ende der Stick-Slip-Phase dar. Dieser Vorgang tritt anschließend nochmals auf (2 min, 8,8 s). Diese lokalen Maxima des Handmoments bei Einsetzen der Bewegung sind auf die Tätigkeit des Fahrers zurückzuführen, der das plötzliche Losbrechen nicht schnell genug kompensieren kann.

## Patentansprüche

1. Elektromechanisches System (1), umfassend mindestens einen Elektromotor (3), mindestens ein mechanisches Element (4), das von dem Elektromotor (3) bewegt wird, und ein Steuergerät (2), wobei dem Steuergerät (2) mindestens eine Eingangsgröße (6) zugeführt wird, wobei das Steuergerät (2) aus der Eingangsgröße (6) eine Sollgröße für den Elektromotor (3) ermittelt,
**dadurch gekennzeichnet, dass**
eine Stellgröße des mechanischen Elementes (4) erfasst und dem Steuergerät (2) übermittelt wird, wobei aus dem Vergleich von Sollgröße für den Elektromotor (3) und der Stellgröße des mechanischen Elementes (4) ein Stick-Slip-Effekt zur Erkennung eines beginnenden Einfrierens erfasst wird.

2. Elektromechanisches System nach Anspruch 1, **dadurch gekennzeichnet, dass** das elektromechanische System (1) als elektromechanische Lenkung ausgebildet ist.

3. Elektromechanisches System nach Anspruch 2, **dadurch gekennzeichnet, dass** die stellgröße des mechanischen Elementes (4) ein Motorwinkel oder ein Ritzelwinkel ist und die Sollgröße des Elektromotors (3) ein Motorsollmoment ist.

4. Elektromechanisches System nach einem der vorangegangenen Ansprüche, **dadurch gekennzeichnet, dass** der Elektromotor (3) bei Erfassung eines Stick-Stip-Effektes zyklisch in wechselnder Richtung bestromt wird.

5. Elektromechanisches System nach Anspruch 4, **dadurch gekennzeichnet, dass** das zyklische Stromsignal für den Elektromotor (3) jeweils im wesentlichen rechteckförmig, trapezförmig, sinusförmig oder dreieckförmig ausgebildet ist.

6. Elektromechanisches System nach einem der Ansprüche 4 oder 5, **dadurch gekennzeichnet, dass** die Frequenz des zyklischen Stromsignals größer 20 Hz ist.

7. Elektromechanisches System nach einem der Ansprüche 4 bis 6, **dadurch gekennzeichnet, dass** das zyklische Stromsignal dem Betriebsstromsignal (7) überlagert ist.

8. Elektromechanisches System nach einem der vorangegangenen Ansprüche, **dadurch gekennzeichnet, dass** bei Erfassung eines Stick-Slip-Effektes eine akustische und/oder optische und/oder haptische Warneinrichtung (14) angesteuert wird.

9. Kraftfahrzeug mit einem elektromechanischen System, umfassend mindestens einen Elektromotor (3), mindestens ein mechanisches Element (4), das von dem Elektromotor (3) bewegt wird, und ein Steuergerät (2), wobei dem Steuergerät (2) mindestens eine Eingangsgröße (6) zugeführt wird, wobei das Steuergerät (2) aus der Eingangsgröße (6) eine Sollgröße für den Elektromotor (3) ermittelt,
**dadurch gekennzeichnet, dass**
eine Stellgröße des mechanischen Elementes (4) erfasst und dem Steuergerät (2) übermittelt wird, wobei aus dem Vergleich von Sollgröße für den Elektromotor (3) und der Stellgröße des mechanischen Elementes (4) ein Stick-Slip-Effekt zur Erkennung eines beginnenden Einfrierens erfasst wird.

10. Verfahren zur Erkennung eines beginnenden Einfrierens eines elektromechanischen Systems (1), mittels mindestens einem Elektromotor (3), mindestens einem mechanischen Element (4), das von dem Elektromotor (3) bewegt wird, und einem Steuergerät (2), wobei dem Steuergerät (2) mindestens eine Eingangsgröße (6) zugeführt wird, wobei das Steuergerät (2) aus der Eingangsgröße eine Sollgröße für den Elektromotor (3) ermittelt,
**dadurch gekennzeichnet, dass**
eine Stellgröße des mechanischen Elementes (4) erfasst wird und dem Steuergerät (2) übermittelt wird, wobei aus dem Vergleich von Sollgröße für den Elektromotor (3) und der Stellgröße des mechanischen Systems (4) ein Stick-Slip-Effekt erfasst wird.

11. Verfahren nach Anspruch 10, **dadurch gekennzeichnet, dass** das elektromechanische System (1) als elektromechanische Lenkung ausgebildet ist, wobei die Stellgröße des mechanischen Elementes (4) ein Motorwinkel des Elektromotors (3) oder ein Ritzelwinkel ist und die Sollgröße des Elektromotors (3) eine Motorsollmoment ist.

12. Verfahren nach Anspruch 10 oder 11, **dadurch gekennzeichnet, dass** der Elektromotor (3) bei Erfassung eines Stick-Slip-Effektes zyklisch in wechselnder Richtung bestromt wird.

13. Verfahren nach Anspruch 12, **dadurch gekennzeichnet, dass** das zyklische Stromsignal für den Elektromotor (3) im wesentlichen jeweils rechteckförmig, trapezförmig, sinusförmig oder dreieckförmig ausgebildet ist.

14. Verfahren nach Anspruch 12 oder 13, **dadurch gekennzeichnet, dass** die Frequenz des zyklischen Stromsignals größer 20 Hz ist.

15. Verfahren nach einem der Ansprüche 12 bis 14, **dadurch gekennzeichnet, dass** das zyklische Stromsignal dem Betriebssignal (7) überlagert ist.

16. Verfahren nach einem der Ansprüche 12 bis 15, **dadurch gekennzeichnet, dass** bei Erfassung eines Stick-Slip-Effektes eine akustische und/oder optische und/oder haptische Warneinrichtung (14) angesteuert wird.

17. Verfahren nach einem der Ansprüche 10 bis 16, **dadurch gekennzeichnet, dass** das Erkennen des Einfrierens die Erkennung der Gefahr des Einfrierens oder die Gefahr der Schwergängigkeit des elektromechanischen Systems (1) einschließt.

## Claims

1. Electromechanical system (1) comprising at least one electric motor (3), at least one mechanical element (4) which is moved by the electric motor (3), and a controller (2), with at least one input variable (6) being supplied to the controller (2), with the controller (2) determining a setpoint variable for the electric motor (3) from the input variable (6),
**characterized in that**
an actuating variable of the mechanical element (4) is detected and transmitted to the controller (2), with a stick-slip effect for identifying initial freezing being detected from the comparison of the setpoint variable for the electric motor (3) and the actuating variable of the mechanical element (4).

2. Electromechanical system according to Claim 1, **characterized in that** the electromechanical system (1) is in the form of an electromechanical steering system.

3. Electromechanical system according to Claim 2, **characterized in that** the actuating variable of the mechanical element (4) is a motor angle or a pinion angle and the setpoint variable of the electric motor (3) is a setpoint motor torque.

4. Electromechanical system according to one of the preceding claims, **characterized in that** the electric motor (3) is supplied with power cyclically in an alternating direction when a stick-slip effect is detected.

5. Electromechanical system according to Claim 4, **characterized in that** the cyclical current signal for the electric motor (3) is in each case substantially rectangular, trapezoidal, sinusoidal or triangular.

6. Electromechanical system according to either of Claims 4 and 5, **characterized in that** the frequency of the cyclical current signal is greater than 20 Hz.

7. Electromechanical system according to one of Claims 4 to 6, **characterized in that** the cyclical current signal is superimposed on the operating current signal (7).

8. Electromechanical system according to one of the preceding claims, **characterized in that** an acoustic and/or optical and/or haptic warning device (14) is actuated when a stick-slip effect is detected.

9. Motor vehicle having an electromechanical system comprising at least one electric motor (3), at least one mechanical element (4) which is moved by the electric motor (3), and a controller (2), with at least one input variable (6) being supplied to the controller (2), with the controller (2) determining a setpoint variable for the electric motor (3) from the input variable (6),
**characterized in that**
an actuating variable of the mechanical element (4) is detected and transmitted to the controller (2), with a stick-slip effect for identifying initial freezing being detected from the comparison of the setpoint variable for the electric motor (3) and the actuating variable of the mechanical element (4).

10. Method for identifying initial freezing of an electromechanical system (1) by means of at least one electric motor (3), at least one mechanical element (4) which is moved by the electric motor (3), and a controller (2), with at least one input variable (6) being supplied to the controller (2), with the controller (2) determining a setpoint variable for the electric motor (3) from the input variable,
**characterized in that**
an actuating variable of the mechanical element (4) is detected and transmitted to the controller (2), with a stick-slip effect being detected from the comparison of the setpoint variable for the electric motor (3) and the actuating variable of the mechanical element (4).

11. Method according to Claim 10, **characterized in that** the electromechanical system (1) is in the form of an electromechanical steering system, with the actuating variable of the mechanical element (4) being a motor angle of the electric motor (3) or a pinion angle and the setpoint variable of the electric motor (3) being a setpoint motor torque.

12. Method according to Claim 10 or 11, **characterized in that** the electric motor (3) is supplied with power cyclically in an alternating direction when a stick-slip effect is detected.

13. Method according to Claim 12, **characterized in that** the cyclical current signal for the electric motor (3) is substantially in each case rectangular, trapezoidal, sinusoidal or triangular.

14. Method according to Claim 12 or 13, **characterized in that** the frequency of the cyclical current signal is greater than 20 Hz.

15. Method according to one of Claims 12 to 14, **characterized in that** the cyclical current signal is superimposed on the operating signal (7).

16. Method according to one of Claims 12 to 15, **characterized in that** an acoustic and/or optical and/or haptic warning device (14) is actuated when a stick-slip effect is detected.

17. Method according to one of Claims 10 to 16, **characterized in that** identification of freezing includes identification of the risk of freezing or the risk of running difficulties in the electromechanical system (1).

## Revendications

1. Système électromécanique (1), comprenant au moins un moteur électrique (3), au moins un élément mécanique (4) mû par le moteur électrique (3) et un appareil de commande (2), au moins une grandeur d'entrée (6) étant amenée à l'appareil de commande (2), l'appareil de commande (2) calculant, à partir de la grandeur d'entrée (6), une grandeur théorique pour le moteur électrique (3), **caractérisé en ce qu'**une grandeur de réglage de l'élément mécanique (4) est captée et transmise à l'appareil de commande (2), un effet de mouvement saccadé stick-slip étant capté en comparant la grandeur théorique du moteur électrique (3) et la grandeur de réglage de l'élément mécanique (4) en vue de détecter un début de congélation.

2. Système électromécanique selon la revendication 1, **caractérisé en ce que** le système électromécanique (1) prend la forme d'une direction électromécanique.

3. Système électromécanique selon la revendication 2, **caractérisé en ce que** la grandeur de réglage de l'élément mécanique (4) est un angle de moteur ou un angle de pignon et la grandeur théorique du moteur électrique (3) est un couple théorique du moteur.

4. Système électromécanique selon l'une quelconque des revendications précédentes, **caractérisé en ce que** le moteur électrique (3) est alimenté, en cas de captation d'un effet de mouvement saccadé stick-slip, de façon cyclique dans une direction puis dans l'autre.

5. Système électromécanique selon la revendication 4, **caractérisé en ce que** le signal de courant cyclique du moteur électrique (3) prend respectivement pour l'essentiel une forme rectangulaire, trapézoïdale, sinusoïdale ou triangulaire.

6. Système électromécanique selon l'une quelconque des revendications 4 ou 5, **caractérisé en ce que** la fréquence du signal de courant cyclique est supérieure à 20 Hz.

7. Système électromécanique selon l'une quelconque des revendications 4 à 6, **caractérisé en ce que** le signal de courant cyclique est superposé au signal de courant de service (7).

8. Système électromécanique selon l'une quelconque des revendications précédentes, **caractérisé en ce qu'**en cas de captation d'un effet de mouvement saccadé stick-slip, un dispositif d'avertissement acoustique et/ou optique et/ou haptique (14) est déclenché.

9. Véhicule automobile avec un système électromécanique, comprenant au moins un moteur électrique (3), au moins un élément mécanique (4) mû par le moteur électrique (3) et un appareil de commande (2), au moins une grandeur d'entrée (6) étant amenée à l'appareil de commande (2), l'appareil de commande (2) calculant, à partir de la grandeur d'entrée (6), une grandeur théorique pour le moteur électrique (3), **caractérisé en ce qu'**une grandeur de réglage de l'élément mécanique (4) est captée et transmise à l'appareil de commande (2), un effet de mouvement saccadé stick-slip étant capté en comparant la grandeur théorique du moteur électrique (3) et la grandeur de réglage de l'élément mécanique (4) en vue de détecter un début de congélation.

10. Procédé de détection d'un début de congélation d'un système électromécanique (1), à l'aide d'au moins un moteur électrique (3), d'au moins un élément mécanique (4) mû par le moteur électrique (3) et d'un appareil de commande (2), au moins une grandeur d'entrée (6) étant amenée à l'appareil de commande (2), l'appareil de commande (2) calculant, à partir de la grandeur d'entrée, une grandeur théorique pour le moteur électrique (3), **caractérisé en ce qu'**une grandeur de réglage de l'élément mécanique (4) est captée et transmise à l'appareil de commande (2), un effet de mouvement saccadé stick-slip étant capté à partir de la comparaison de la grandeur théorique du moteur électrique (3) et de la grandeur de réglage du système mécanique (4).

11. Procédé selon la revendication 10, **caractérisé en ce que** le système électromécanique (1) prend la forme d'une direction électromécanique, la grandeur de réglage de l'élément mécanique (4) étant un angle de moteur du moteur électrique (3) ou un angle de pignon et la grandeur théorique du moteur électrique (3) étant un couple théorique du moteur.

12. Procédé selon la revendication 10 ou 11, **caractérisé en ce que** le moteur électrique (3) est alimenté de façon cyclique dans une direction puis dans l'autre en cas de détection d'un effet de mouvement saccadé stick-slip.

13. Procédé selon la revendication 12, **caractérisé en ce que** le signal de courant cyclique du moteur électrique (3) prend respectivement pour l'essentiel une forme rectangulaire, trapézoïdale, sinusoïdale ou triangulaire.

14. Procédé selon la revendication 12 ou 13, **caractérisé en ce que** la fréquence du signal de courant cyclique est supérieure à 20 Hz.

15. Procédé selon l'une quelconque des revendications 12 à 14, **caractérisé en ce que** le signal de courant cyclique est superposé au signal de service (7).

16. Procédé selon l'une quelconque des revendications 12 à 15, **caractérisé en ce qu'**un dispositif d'avertissement acoustique et/ou optique et/ou haptique (14) est déclenché en cas de captation d'un effet de mouvement saccadé stick-slip.

17. Procédé selon l'une quelconque des revendications 10 à 16, **caractérisé en ce que** la détection de la congélation inclut la détection du risque de congélation ou du risque de difficulté de circulation dans le système électromécanique (1).
